# EUROPÄISCHE PATENTANMELDUNG

(11) **EP 0 870 734 A2**
(43) Veröffentlichungstag der Anmeldung: **14.10.1998**
(21) Anmeldenummer: 98106033.8
(22) Anmeldetag: 02.04.1998
(51) Int. Cl.: C02F 9/00

(54) **Verfahren und Anordnung zur Aufbereitung von mit Salz und anderen Stoffen verunreinigtem Waschwasser**

(30) Priorität: 07.04.1997 DE 19714088
(71) Anmelder: Peltzer-Werke Form & Präzision in Metall GmbH, 52222 Stolberg (DE)
(72) Erfinder: Tsiwikis, Georg, 52078 Aachen (DE)
(74) Vertreter: Kohlmann, Kai, Dipl.-Ing.

(57) **Zusammenfassung**

Die Erfindung betrifft ein Verfahren sowie eine Anordnung zur Aufbereitung von mit Salz und anderen Stoffen verunreinigtem Waschwasser aus einer Waschstation, insbesondere einer Salzbadvulkanisationsanlage.

Aufgrund der erfindungsgemäßen Verfahrensführung sowie der Anordnung hierzu, wird eine Abgabe des Waschwassers in die Kanalisation vermieden, gleichzeitig die in der vorgeschalteten Salzbadvulkanisationsanlage zu ergänzende Salzmenge reduziert und die Bildung von Karbonaten verhindert.

## Beschreibung

Die Erfindung betrifft ein Verfahren sowie eine Anordnung zur Aufbereitung von mit Salz und anderen Stoffen verunreinigtem Waschwasser aus einer Waschstation eines vorgeschalteten Prozesses. Insbesondere soll das Wasser einer Waschstation einer Salzbadvulkanisationsanlage gereinigt werden.

Bei der Salzbadvulkanisation von Elastomeren werden unterschiedliche chemische Stoffe und Öle, die bei Kautschukmischungen als Weichmacher dienen, freigesetzt. Diese Chemikalien und Öle werden im Salz gelöst. Die zumeist strangförmigen Erzeugnisse gelangen aus der Salzbadvulkanisationsanlage in eine kaskadenförmige Waschstation und schleppen dabei die Salze und andere Chemikalien aus dem Salzbad in die Waschstation. Darüber hinaus entstehen in der Salzbadvulkanisationsanlage während des Betriebes Karbonate. Die Karbonate bilden Kristalle und behindern schließlich den Betrieb der Salzbadvulkanisationsanlage.

Aufgrund zunehmend strengerer gesetzlicher Bestimmungen ist es nicht mehr gestattet, das sich während des Betriebs mit Salz und anderen chemischen Stoffen anreichernde Waschwasser der Waschstation in die Kanalisation abzugeben.

Schließlich führt der ständige Eintrag von Salzen in die Waschstation zu einem Salzverlust in der Salzbadvulkanisationsanlage, der ständig ausgeglichen werden muß. Herkömmliche Salzbadvulkanisationsanlagen haben beispielsweise einen Salzergänzungsbedarf von 300 - 500 kg je Woche. Bei Kosten für das Salz zwischen DM 1,50 und DM 8,50 je kg sind mit der Salzergänzung erhebliche Kosten verbunden.

Ausgehend von diesem Stand der Technik liegt der Erfindung daher die Aufgabe zugrunde, ein Verfahren und eine Anordnung vorzuschlagen, mit der die Abgabe des Waschwassers in die Kanalisation vermieden und gleichzeitig die in vorgeschalteten Prozessen zu ergänzende Salzmenge reduziert und die Bildung von Karbonaten verhindert wird.

Die Lösung dieser Aufgabe ergibt sich aus den Merkmalen des Anspruchs 1.

Indem das Waschwasser von der Waschstation in einen Zwischenbehälter und von dem Zwischenbehälter wieder in die Waschstation im Kreislauf gefördert wird, steigt allmählich die Salzkonzentration in dem Zwischenbehälter. Eine Mindestsalzkonzentration ist erforderlich, um eine ausreichende Salzrückgewinnungsleistung zu erzielen. Andernfalls wären unverhältnismäßig hohe Verdampferleistungen bei der Salzrückgewinnung erforderlich, um einen angemessenen Durchsatz zu erzielen.

Die Zugabe eines PH-Regulators in das Waschwasser des Zwischenbehälters sorgt für einen konstanten PH-Wert des Wassers. Insbesondere wenn dieser im Bereich zwischen 5 - 6 gehalten wird, wird eine unerwünschte Schaumbildung bei der Salzrückgewinnung am Verdampfer verhindert.

Die Zugabe des PH-Regulators verhindert jedoch nicht nur die Schaumbildung, sondern reduziert darüber hinaus wirksam die Karbonatbildung im Salzbad des vorgeschalteten Prozesses. Das "Impfen" des Waschwassers in dem Zwischenbehälter mit dem PH-Regulator, vorzugsweise Salpetersäure, und die gleichzeitige Rückführung des flüssigen Salzes in das Salzbad des Prozesses bewirken diesen Effekt. Eine unmittelbare Zugabe des PH-Regulators in das Salzbad des Prozesses wäre indes ausgeschlossen, da die Salpetersäure unmittelbar verdampfen würde.

Durch die weitgehend vollständige Rückführung des Salzes in das Salzbad des Prozesses, insbesondere der Salzbadvulkanisation, reduziert sich der Ergänzungsbedarf an Salz auf geringfügige Mengen, beispielsweise etwa 10 kg je Woche.

Zur Vergleichmäßigung des Verfahrens kann es vorteilhaft sein, daß das die Emulsionsspaltanlage verlassende Waschwasser zunächst einem als Puffer wirkenden Behälter und erst von dort der Salzrückgewinnungsanlage zugeführt wird.

Eine vorteilhafte Ausgestaltung einer Anordnung zur Durchführung des Verfahrens ergibt sich aus den Merkmalen der Ansprüche 6 und 7.

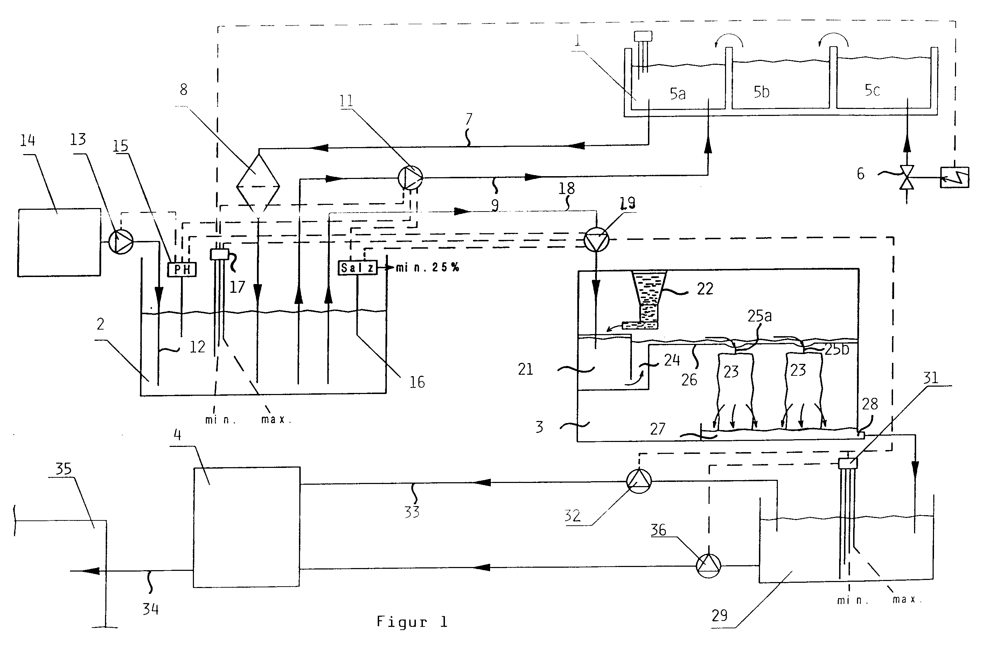

Nachfolgend wird das erfindungsgemäße Verfahren anhand einer schematisch in Figur 1 dargestellten Anordnung des näheren erläutert:

Die Anordnung besteht im wesentlichen aus einer Waschstation 1, einem Zwischenbehälter 2, einer Emulsionsspaltanlage 3 sowie einer Salzrückgewinnungsanlage 4.

Die Waschstation 1 unterteilt sich in Zonen 5a, b, c, die mit Waschwasser befüllt sind. Die Wasserzufuhr erfolgt über ein Ventil 6 in die Zone 5c. Von dort läuft das Waschwasser kaskadenförmig in die Zone 5b und dann in die Zone 5a.

Die in einer nicht dargestellten Salzbadvulkanisationsanlage hergestellten Stränge durchlaufen die Waschstation in entgegengesetzter Richtung von der Zone 5a zur Zone 5c. Der Übersichtlichkeit halber sind weder ein Strang noch die Umlenkmittel zur Führung des Stranges gezeichnet. Mit den Strängen gelangen kontinuierlich daran haftende Salze in die Waschstation 1. Darüber hinaus werden bei der Salzbadvulkanisation Karbonate gebildet sowie Öle und andere chemische Stoffe freigesetzt und zumindest zum Teil im Salz gelöst. Die Karbonate, Öle und chemischen Stoffe werden ebenfalls in das Waschwasser eingetragen.

Die Zone 5a der Waschstation 1 verbindet eine Hinlaufleitung 7, in die ein Filter 8 für die Karbonate, Schäume sowie andere mechanisch trennbare Verunreinigungen eingebaut ist, mit dem Zwischenbehälter 2. Vom Zwischenbehälter 2 führt eine Rücklaufleitung 9, in die eine Pumpe 11 eingebaut ist, zurück zur Zone 5a der Waschstation 1. Die Pumpe 11 führt das Waschwasser zwischen der Zone 5a und dem Zwischenbehälter 2 über die Hin- und Rücklaufleitung 7, 9 im Kreislauf.

Über eine Leitung 12 sowie eine weitere Pumpe 13 steht der Zwischenbehälter 2 mit einem Salpetersäure enthaltenen Tank 14 in Verbindung. Schließlich weist der Zwischenbehälter 2 eine Sonde 15 zur Messung des PH-Wertes des Waschwassers, einen Sensor 16 zur Bestimmung der Salzkonzentration und einen Füllstandssensor 17 zum Erfassen des Flüssigkeitsspiegels auf.

Über die Pumpe 11 wird das Waschwasser solange zwischen der Waschstation 1 und dem Zwischenbehälter 2 über die Hin- und Rücklaufleitung 7, 9 im Kreislauf gefahren, bis eine voreinstellbare Salzkonzentration von mindestens 25 % im Zwischenbehälter erreicht ist.

Während dessen fördert die Pumpe 13 aus dem Tank 14 bedarfsgerecht Salpetersäure, so daß das Waschwasser in dem Zwischenbehälter 2 einen PH-Wert von 5 - 6 aufweist. Die Pumpe 13 kann je nach dem an der Sonde 15 gemessenen PH-Wert unabhängig von der Pumpe 11 ein- bzw. abgeschaltet werden. Sobald der mittels der Sonde 15 gemessene PH-Wert den voreingestellten Wert von 5 - 6 erreicht hat und der den Leitwiderstand des Waschwassers messende Sensor 16 die beispielsweise voreingestellte 25 %ige Konzentration des Salzes signalisiert, schaltet ein in der Figur nicht dargestellter Steuermechanismus die Pumpe 11 ab.

Mit dem Abschalten der Pumpe 11 wird eine in einem Zulauf 18 angeordnete Pumpe 19 von dem Steuerungsmechanismus eingeschaltet, die das Waschwasser aus dem Zwischenbehälter 2 der Emulsionsspaltanlage 3 zuführt. Dort werden die im Salz gelösten Öle sowie die freien Öle im Waschwasser abgetrennt. Hierzu besitzt die Emulsionsspaltanlage eine Reaktionsstufe 21, in die der Zulauf 18 mündet. Oberhalb der Reaktionsstufe 21 befindet sich ein Zugabetrichter 22, über den ein Reaktionstrennmittel, im gezeigten Ausführungsbeispiel Bentonit, der Reaktionsstufe 21 zugegeben wird.

Infolge der Zugabe des Bentonits entstehen Flocken aus Öl und Bentonit, die in Sackfiltern 23 zurückgehalten werden, nachdem das Flocken-Waschwassergemisch von der Reaktionsstufe 21 über einen Kanal 24, einen Öffnungen 25a, b aufweisenden Boden 26 in obere Öffnungen der Sackfilter 23 geflossen ist.

Durch die Mantelfläche der Sackfilter tritt das Waschwasser aus und wird in einem Sammelbecken 27 mit einem Auslaß 28 aufgefangen. Von dort gelangt das Waschwasser in einen als Puffer wirkenden Behälter 29 mit einem Füllstandssensor 31. Sobald der Füllstandssensor 31 das Erreichen des oberen Flüssigkeitsspiegels des Behälters 29 signalisiert, wird eine Pumpe 32 gestartet, die das Waschwasser aus dem Behälter 29 über eine Leitung 33 in die Salzrückgewinnungsanlage 4 fördert. Gleichzeitig schaltet das Signal des Füllstandssensors 31, falls erforderlich, über den Steuermechanismus die Pumpe 19 im Zulauf 18 der Emulsionsspaltanlage ab, um ein Überfüllen des Behälters 29 und damit ein Überlaufen des Waschwassers zu verhindern.

Bei korrekter Auslegung der Anlage und ungestörtem Betrieb wird jedoch die Pumpe 19 bereits vorher, bei Erreichen des minimalen Füllstandes des Zwischenbehälters 2 mit Hilfe des Füllstandssensors 17 abgeschaltet. Zu diesem Zeitpunkt wird auch das Ventil 6 geöffnet, das Frischwasser über die Zone 5c in die Waschstation 1 einläßt.

Die nur schematisch angedeutete Salzrückgewinnungsanlage 4 besteht aus einem spiralförmigen Verdampfungskörper, den ein mit Gas oder ein elektrisch beheizter Luftkreislauf auf eine Temperatur von ca. 200 °C bringt.

Das Waschwasser gelangt über die Leitung 33 auf den Verdampfungskörper und das zurückgewonnene Salz fließt in geschmolzener Form mit ca. 200 °C über einen Abfluß 34 zurück in die Salzbadvulkanisationsanlage 35. Sobald der Steuerungsmechanismus über den Füllstandssensor 31 die Meldung des unteren Flüssigkeitsspiegels im Behälter 29 erhält, wird die Pumpe 32 abgeschaltet und eine Pumpe 36 eingeschaltet, die weiterhin eine ausreichende Menge des Waschwassers aus dem Sumpf des Behälters 29 auf den Verdampfungskörper fördert, um ihn zu befeuchten. Hierdurch wird eine Selbstentzündung von brennbaren Rückständen auf dem Verdampfer während der Betriebspausen verhindert.

| **Bezugszeichenliste** | | | |
|---|---|---|---|
| **Nr.** | **Bezeichnung** | **Nr.** | **Bezeichnung** |
| 1. | Waschstation | 19. | Pumpe |
| 2. | Zwischenbehälter | 20. | - |
| 3. | Emulsionsspaltanlage | 21. | Reaktionsstufe |
| 4. | Salzrückgewinnungsanlage | 22. | Zugabetrichter |
| 5.a,b,c | Zonen | 23. | Sackfilter |
| 6. | Ventil | 24. | Kanal |
| 7. | Hinlaufleitung | 25. | Öffnungen |
| 8. | Filter | 26. | Boden |
| 9. | Rücklaufleitung | 27. | Sammelbecken |
| 10. | - | 28. | Auslaß |
| 11. | Pumpe | 29. | Behälter |
| 12. | Leitung (Salpetersäure) | 30. | - |
| 13. | Pumpe (Salpetersäure) | 31. | Füllstandssensor (29) |
| 14. | Tank | 32. | Pumpe |
| 15. | Sonde (PH-Wert) | 33. | Leitung |
| 16. | Sensor (Salzkonzentration) | 34. | Abfluß |
| 17. | Füllstandssensor (2) | 35. | Salzbadvulkanisations-Anlage |
| 18. | Zulauf | 36. | Pumpe |

## Patentansprüche

1. Verfahren zur Aufbereitung von mit Salz und anderen Stoffen verunreinigtem Waschwasser aus einer Waschstation eines vorgeschalteten Prozesses, insbesondere dem der Salzbadvulkanisation von Elastomeren, **dadurch gekennzeichnet**, daß
- das Waschwasser solange von der Waschstation (1) in einen Zwischenbehälter (2) und von dem Zwischenbehälter (2) wieder in die Waschstation (1) gefördert wird, bis eine als Sollwert vorgegebene Mindestkonzentration des Salzes in dem Zwischenbehälter (2) erreicht ist,
- gleichzeitig der PH-Wert des Waschwassers in dem Zwischenbehälter (2) gemessen und ein PH-Regulator in das Waschwasser des Zwischenbehälters (2) gegeben wird, bis ein als Sollwert vorgegebener PH-Wert des Waschwassers in dem Zwischenbehälter (2) erreicht ist,
- nach Erreichen der Mindestkonzentration des Salzes und des vorgegebenen PH-Wertes die Förderung des Waschwassers von der Waschstation (1) in den Zwischenbehälter (2) und von dem Zwischenbehälter (2) wieder in die Waschstation (1) unterbrochen wird,
- anschließend das Waschwasser aus dem Zwischenbehälter (2) einer an sich bekannten Emulsionsspaltanlage (3) zugeführt wird, in der in dem Salz gelöste Öle und freie Öle im Waschwasser abgetrennt werden und
- das die Emulsionsspaltanlage (3) verlassende Waschwasser einer Salzrückgewinnungsanlage (4) zugeführt wird, in der mittels eines Verdampfers das Salz von dem verdampfenden Waschwasser bei einer Temperatur getrennt wird, die eine Förderung des getrennten Salzes im flüssigem Zustand in den vorgeschalteten Prozeß ermöglicht.

2. Verfahren nach Anspruch 1, **dadurch gekennzeichnet**, daß als Sollwert für die Mindestkonzentration des Salzes in dem Zwischenbehälter 25 % und ein PH-Wert des Waschwassers in dem Zwischenbehälter zwischen 5 bis 6 vorgegeben wird.

3. Verfahren nach Anspruch 1 oder 2, **dadurch gekennzeichnet**, daß als PH-Regulator in das Waschwasser des Zwischenbehälters (2) Salpetersäure gegeben wird.

4. Verfahren nach einem der Ansprüche 1 bis 3, **dadurch gekennzeichnet**, daß das die Emulsionsspaltanlage (3) verlassende Waschwasser zunächst einem als Puffer wirkenden Behälter (29) und von dort der Salzrückgewinnungsanlage (4) zugeführt wird.

5. Verfahren nach einem der Ansprüche 1 bis 4, **dadurch gekennzeichnet**, daß in der Emulsionsspaltanlage (3) mit Hilfe eines dem Waschwasser zugegebenen Reaktionstrennmittels, insbesondere Bentonit, Öle aus dem Waschwasser und in dem Salz gelöste Öle abgeschieden und in Filtern (23) zurückgehalten werden.

6. Anordnung zur Durchführung des Verfahrens nach einem der Ansprüche 1 bis 5, **dadurch gekennzeichnet**, daß
- ein Zwischenbehälter (2) für Waschwasser über eine Hin- und Rücklaufleitung (7, 9) mit einer Waschstation (1) verbunden ist,
- die Hin- und/oder Rücklaufleitung (7, 9) mindestens ein Fördermittel (11) für das Waschwasser aufweist, um das Waschwasser von der Waschstation (1) in den Zwischenbehälter (2) und von dem Zwischenbehälter (2) wieder in die Waschstation (1) zu fördern,
- ein auf die Leitfähigkeit des Waschwassers reagierender Sensor (16) zur Messung der Salzkonzentration des Waschwassers in dem Zwischenbehälter (2) angeordnet ist,
- eine Sonde (15) zur Messung des PH-Wertes des Waschwassers in dem Zwischenbehälter (2) angeordnet ist, um abhängig vom gemessenen PH-Wert über einen Steuermechanismus ein Fördermittel (13) zu betätigen, das einen PH-Regulator aus einem Behälter (14) in den Zwischenbehälter (2) fördert,
- nach Erreichen einer mittels des Steuermechanismus vorzugebenden Mindestkonzentration des Salzes und des PH-Wertes das Fördermittel (11) in der Hin-und/oder Rücklaufleitung abgeschaltet wird,
- das ein ein Fördermittel (19) aufweisender Zulauf (18) den Zwischenbehälter (2) mit einer an sich bekannten Emulsionsspaltanlage (3) verbindet, wobei das Fördermittel (19) nach Erreichen der Mindestkonzentration des Salzes und des vorgegebenen PH-Wertes von dem Steuermechanismus eingeschaltet wird und
- ein Ablauf (28) der Emulsionsspaltanlage (3) über eine ein weiteres Fördermittel (32) aufweisende Leitung (33) mit einem eine Heizvorrichtung aufweisenden Verdampfer zur Trennung des Salzes von dem Waschwasser verbunden ist.

7. Anordnung nach Anspruch 6, **dadurch gekennzeichnet**, daß die Leitung (32) von der Emulsionsspaltanlage (3) zum Verdampfer über einen als Puffer wirkenden Behälter (29) mit einem Füllstandssensor (31) für dessen Flüssigkeitsspiegel läuft, wobei beim Erreichen eines oberen Flüssigkeitsspiegels der Steuermechanismus das Fördermittel (19) in dem Zulauf (18) zur Emulsionsspaltanlage (3) anhält und das Fördermittel (32) in der Leitung (33) zum Verdampfer einschaltet.
